# EUROPÄISCHE PATENTSCHRIFT

(11) **EP 4 163 504 B1**
(45) Veröffentlichungstag und Bekanntmachung des Hinweises auf die Patenterteilung: **30.07.2025**
(21) Anmeldenummer: 22193879.8
(22) Anmeldetag: 05.09.2022
(51) Int. Cl.: F16B 5/02, F16B 5/06

(54) **VERBINDUNGSBESCHLAG**
CONNECTION FITTING
FERRURE DE LIAISON

(30) Priorität: 07.10.2021 DE 202021105425 U
(43) Veröffentlichungstag der Anmeldung: 12.04.2023
(73) Patentinhaber: Grote, Daniel, 32339 Espelkamp (DE)
(72) Erfinder: Grote, Daniel, 32339 Espelkamp (DE)
(74) Vertreter: Ter Meer Steinmeister & Partner

(56) Entgegenhaltungen:
- EP-A1- 0 027 267
- EP-A1- 2 336 474
- DE-U1- 202016 104 279

## Beschreibung

Die Erfindung betrifft einen Verbindungsbeschlag zum verspannenden Verbinden von zwei auf Stoß aneinander anliegenden Bauteilen, die jeweils in einer Hauptfläche eine Ausnehmung aufweisen, welcher Verbindungsbeschlag einen flach auf die Hauptflächen auflegbaren Steg aufweist, an dem zwei Eingriffsteile für den Eingriff in je eine der Ausnehmungen angeordnet sind, wobei mindestens eines der Eingriffsteile gelenkig an dem Steg gehalten und mittels einer Spanneinrichtung gegen eine Wand der Ausnehmung spannbar ist und das mindestens eine der Eingriffsteile einstückig mit dem Steg verbunden ist, wobei die Spanneinrichtung eine Spannschraube und ein starr an dem Steg gehaltenes Widerlager für die Spannschraube aufweist.

Ein Verbindungsbeschlag dieser Art, der beispielsweise zum Verbinden zweier auf Gehrung aneinander anliegender Rahmenelemente dient, ist in DE 20 2016 104 279 Ulbeschrieben.

Aufgabe der Erfindung ist es, einen Verbindungsbeschlag zu schaffen, der kostengünstiger herstellbar ist.

Diese Aufgabe wird erfindungsgemäß dadurch gelöst, dass das mindestens eine der Eingriffsteile über ein Filmscharnier mit dem Steg verbunden ist, das Eingriffsteil und das Widerlager einen sich verjüngenden Schraubkanal begrenzen und das Eingriffsteil beim Einschrauben der Spannschraube in den Schraubkanal nach Art eines Spreizdübels von dem Widerlager abspreizbar ist.

Beim Einschrauben der Spannschraubewerden das Widerlager und das Eingriffsteil gespreizt, wodurch das Eingriffsteil gegen die Wand der Ausnehmung gespannt wird. Vorteilhafte Ausgestaltungen der Erfindung sind in den Unteransprüchen angegeben.

Wahlweise kann auch das zweite Eingriffsteil über ein Filmscharnier mit dem Steg verbunden und durch eine Spanneinrichtung gegen die Wand der Ausnehmung des anderen Bauteils spannbar sein. Die Spanneinrichtungen für die beiden Eingriffsteile können gleich ausgebildet sein oder zumindest nach dem gleichen Funktionsprinzip arbeiten.

In einer Ausführungsform sind die beiden Eingriffsteile in der gleichen Richtung von den zugehörigen Widerlagern abspreizbar. Das Widerlager für ein erstes der Eingriffsteile bildet dann auf der dem Eingriffsteil entgegengesetzten Seite eine Anlagefläche, mit es sich an der Wand der Ausnehmung abstützt. Wenn dann das erste Eingriffsteil gegen die gegenüberliegende Wand der Ausnehmung gespannt wird, so wird dadurch der gesamte Verbindungsbeschlag fest in der Ausnehmung des ersten Bauteils verankert. Die beiden Bauteile können dann so aneinander angelegt werden, dass sich der Steg über die zwischen den Bauteilen gebildete Stoßfuge hinweg erstreckt und das zweite Eingriffsteil in die Ausnehmung des zweiten Bauteils eingreift. Durch Verspannen des zweiten Eingriffsteils werden dann die beiden Bauteile an der Stoßfuge fest gegeneinander gespannt.

Der Steg, die Eingriffsteile und die Widerlager können durch ein einstückiges Kunststoff-Spritzteil gebildet werden. Schraubkanäle für die Spannschrauben können sich durchgehend in Querrichtung des Steges erstrecken, so dass sie jeweils das Eingriffsteil und das Widerlager vollständig voneinander trennen. Die für den Eingriff in die Gewinde der Spannschrauben vorgesehenen Profile lassen sich dann so gestalten, dass sich das Kunststoffteil mittels Schrägzügen entformen lässt. Je nach Gestaltung dieser Profile können die beim Eindrehen der Spannschrauben an den Wänden der Schraubkanäle auftretenden Reibungskräfte für das Profil auf der Seite des Eingriffsteils einerseits und für das Profil auf der Seite des Widerlagers andererseits unterschiedlich sein, so dass beim Eindrehen der Schrauben eine Kraft wirkt, die die Tendenz hat, die Schrauben in Querrichtung des Steges zu verschieben. Diese Kraft lässt sich jedoch dadurch ausgleichen, dass an einem der Schraubkanalprofile ein Stützvorsprung für die Schraube angebracht wird.

Die Spannschrauben können aus Metall oder Kunststoff bestehen und getrennt von dem Körper ausgebildet sein, der den Steg und die Eingriffsteile bildet. Sofern sowohl dieser Körper als auch die Schrauben aus Kunststoff bestehen, können die Schrauben auch jeweils durch einen abscherbaren Verbindungsstreifen mit dem Kunststoffkörper des Steges verbunden sein, so dass der komplette Verbindungsbeschlag beim Entformen aus dem Spritzwerkzeug ein einstückiges Element ist, das sich einfach handhaben und verpacken lässt. Beim Einsatz des Verbindungsbeschlages werden dann die Schrauben mit einem Werkzeug in die Schraubkanäle eingedreht, wobei automatisch die Verbindungsstreifen abgeschert werden.

Im folgenden wird ein Ausführungsbeispiel anhand der Zeichnung näher erläutert.

Es zeigen:
- Fig. 1: einen Schnitt durch einen Verbindungsbeschlag zusammen mit zwei durch den Beschlag zu verbindenden Bauteilen;
- Fig. 2: einen Schnitt längs der Linie II - II in Fig. 1;
- Fig. 3: eine perspektivische Ansicht des Verbindungsbeschlages; und
- Fig. 4: eine Ansicht eines Verbindungsbeschlages gemäß einem anderen Ausführungsbeispiel.

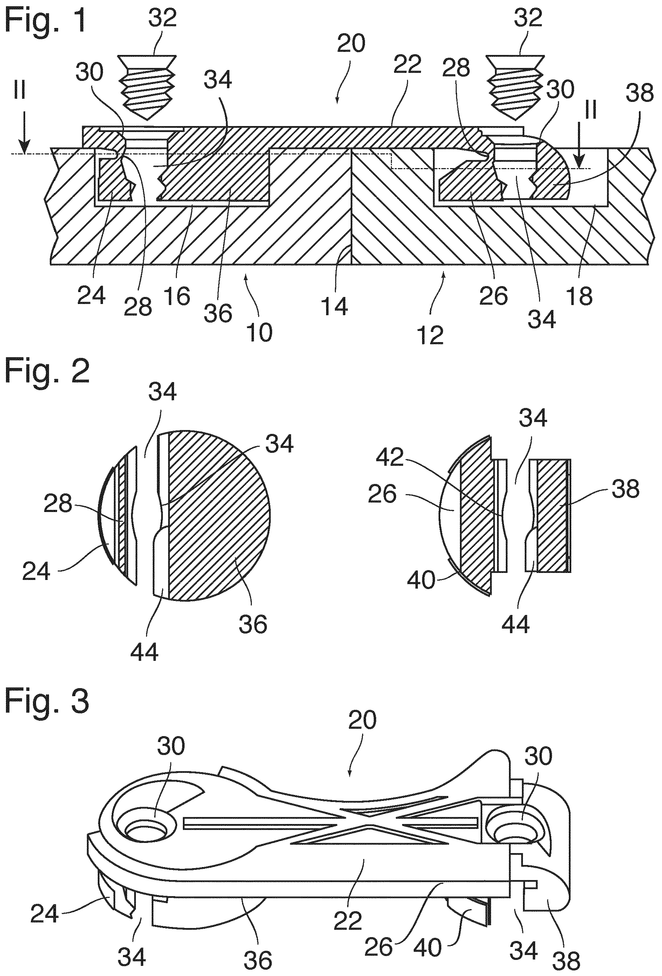

In Fig. 1 sind in einem Schnitt die Randzonen eines ersten Bauteils 10 und eines zweiten Bauteils 12 gezeigt, die an einer Stoßfuge 14 aneinander anliegen. Bei den Bauteilen 10, 12 kann es sich beispielsweise um Zargenelemente einer Türzarge handeln, die an der Stoßfuge 14 auf Gehrung miteinander zu verbinden sind.

Jedes der Bauteile 10, 12 weist in einer seiner Hauptflächen, nämlich in der in Fig. 1 oberen Oberfläche, eine Ausnehmung 16 bzw. 18 in der Form einer Topfbohrung auf. Zum verspannenden Verbinden der Bauteile 10, 12 ist ein Verbindungsbeschlag 20 vorgesehen, der im gezeigten Beispiel durch ein einstückiges Spritzteil aus Kunststoff gebildet wird.

Der Verbindungsbeschlag 20 weist einen Steg 22 auf, der flach auf den Oberseiten der Bauteile 10, 12 aufliegt und sich über die Stoßfuge 14 hinweg erstreckt. An der Unterseite weist der Steg 22 ein erstes Eingriffsteil 24 für den Eingriff in die Ausnehmung 16 des ersten Bauteils 10 und ein zweites Eingriffsteil 26 für den Eingriff in die Ausnehmung 18 des zweiten Bauteils 12 auf. Die Eingriffsteile 24, 26 sind jeweils über ein im Querschnitt bogenförmiges Filmscharnier 28 mit dem Steg 22 verbunden.

Angrenzend an jedes der beiden Filmscharniere 28 weist der Steg 22 ein Schraubenloch für eine Spannschraube 32 auf. Durch das Schraubenloch 30 hindurch sind die Spannschrauben 32 jeweils in einen Schraubkanal 34 eindrehbar, der sich in Querrichtung des Steges 22 erstreckt und das Eingriffsteil 24 bzw. 26 von einem Widerlager 36 bzw. 38 trennt, das starr an der Unterseite des Steges 22 angeordnet ist.

Die Schraubkanäle 34 sind in der Breite nach unten verjüngt und werden sowohl auf Seiten des Eingriffsteils 24 bzw. 26 als auch auf Seiten des Widerlagers 36 bzw. 38 durch Schraubprofile begrenzt, die zu den Gewindegängen der Spannschrauben 32 komplementär sind.

Wie auch in Fig. 2 gezeigt ist, ist das Widerlager 36 so gestaltet, dass es mehr als die Hälfte des Querschnitts der ersten Ausnehmung 16 ausfüllt und sich auf der dem ersten Eingriffsteil 24 entgegengesetzten Seite an der Wand der Ausnehmung abstützt. Wenn nun die Spannschraube 32 in den durch dieses Widerlager 36 und das Eingriffsteil 24 gebildeten Schraubkanal eingeschraubt wird, so wird das erste Eingriffsteil 24 unter Verformung des Filmscharniers 28 von dem Widerlager 36 weggespreizt und fest gegen die Wand der Ausnehmung 16 gespannt. Auf diese Weise wird der gesamte Verbindungsbeschlag 20 klemmend in der Ausnehmung 16 des ersten Bauteils 10 gehalten.

In Fig. 2 geht die Schnittebene durch das Filmscharnier 28 des ersten Eingriffsteils 24, so dass das Eingriffsteil in der Draufsicht zu erkennen ist. Dieses Eingriffsteil 24 hat im Grundriss die Form eines Kreissegments, ist jedoch nach unten konisch erweitert, so dass es am unteren Rand eine radial vorspringende Kante bildet, die sich fest in die Umfangswand der Ausnehmung 16 einkrallen kann. Dadurch wird ein fester Halt des Verbindungsbeschlages 20 in der Ausnehmung 16 erreicht.

Das Widerlager 38, das dem zweiten Eingriffsteil 26 gegenüberliegt, füllt die zugehörigen Ausnehmung 18 nicht vollständig aus, sondern bildet ein abgerundetes Ende des Verbindungsbeschlages.

Das zweite Verbindungsteil 26 ist, wie Fig. 2 zeigt, im Grundriss ebenfalls kreissegmentförmig, ist jedoch an der Oberseite in Richtung auf die Stoßfuge 14 abgeschrägt, so dass es in Fig. 2 nur in seinem rechten Teil im Schnitt, im linken Teil dagegen in der Draufsicht dargestellt ist. Wenn die Spannschraube 32 in den sich verjüngenden Schraubkanal 34 zwischen den Eingriffsteil 26 und dem Widerlager 38 eingeschraubt wird, so wird auch das Eingriffsteil 26 unter Verformung des Filmscharniers 28 verschwenkt und vom Widerlager 38 weggespreizt, so dass es gegen die Wand der Ausnehmung 18 gespannt wird. Die dadurch auf den Steg 22 ausgeübte Reaktionskraft wird dadurch aufgefangen, dass sich das Widerlager 36 an der Umfangswand der ersten Ausnehmung 16 abstützt. Die an der Stoßfuge 14 aneinander anliegenden Teile des ersten Bauteils 10 und des zweiten Bauteils 12 werden daher zwischen dem Widerlager 36 und dem zweiten Eingriffsteil 26 eingespannt und fest zusammengezogen.

Wie Fig. 2 zeigt, weist das zweite Eingriffsteil 26 an seinem Umfangsrand erhabene Plateaus 40 auf, die durch scharfe horizontal verlaufende Kanten begrenzt werden. Diese Kanten krallen sich in die Umfangswand der Ausnehmung 18 ein, wenn das Eingriffsteil 26 gegen diese Umfangswand gespannt wird. Da die Plateaus 40 außerdem unterhalb des durch das Filmscharnier 28 gebildeten Drehpunktes liegen, entsteht bei der Schwenkbewegung des Eingriffsteils 26 eine Reaktionskraft mit einer vertikalen Kraftkomponente, die das Filmscharnier 28 und den angrenzenden Teil des Steges 22 nach unten zieht und so zuverlässig verhindert, dass der Steg 22 durch die beim Spannen des Eingriffsteils auftretende Zugkraft von dem Bauteil 12 weggebogen wird.

Da das Filmscharnier 28 im Querschnitt (Fig. 1) die Form eines waagerecht liegenden U-Bogens hat, ist es in vertikaler Richtung komprimierbar. Wenn die Spannschraube 32 so weit eingeschraubt wird, dass sie sich mit ihrem Kopf auf dem Rand des Schraubenloches 30 abstützt, so wird auf das obere Ende des Filmscharniers 28 eine abwärts gerichtete Kraft ausgeübt, während das mit dem Eingriffsteil 26 verbundene untere Ende durch den Eingriff der Gewindegänge der Spannschraube in das Schraubprofil des Eingriffsteils 26 nach oben gezogen wird. Die in Fig. 1 linke Seite des Schraubkanals 34 wird deshalb in vertikaler Richtung verkürzt, während die durch das Widerlager 38 gebildete Seite starr ist. So wird ein zusätzliches Drehmoment erzeugt, das die Tendenz hat, das Eingriffsteil 26 zusammen mit der Spannschraube 32 und dem Widerlager 38 gegen die Umfangswand der Ausnehmung 18 zu schwenken. Auf diese Weise wird die Klemmkraft, die die Bauteile 10 und 12 zusammenhält, zusätzlich erhöht.

Wie in Fig. 2 zu erkennen ist, bilden die Schraubprofile, die die beiden Schraubkanäle 34 begrenzen, in der Mitte jeweils einen bogenförmigen Einzug 42, der dazu beiträgt, die Spannschrauben 22 in den Schraubkanälen zu zentrieren. In Fig. 1 ist zu erkennen, dass die Verjüngung des Schraubkanals 34 im oberen Teil durch einen schrägen Verlauf der Wand des Eingriffsteils 24 bzw. 26 erreicht wird, während die Wände der Widerlager 36, 38 in diesem Teil vertikal verlaufen. Diese Asymmetrie hat zur Folge, dass die Reibungskräfte, die beim Eindrehen der Spannschraube 32 zwischen dieser Spannschraube und den Wänden des Schraubkanals 34 auftreten, ebenfalls asymmetrisch sind und auf die Spannschraube eine resultierende Kraft ausüben, die, da die Schrauben rechts herum eingeschraubt werden, in Fig. 1 auf den Betrachter zu und in Fig. 2 nach unten gerichtet ist. Um ein Auswandern der Spannschrauben längs des Schraubkanals zu verhindern, bilden die Widerlager 36 und 38 an der Wand, die den Schraubkanal 34 begrenzt, jeweils einen asymmetrischen Stützvorsprung 44, durch den die Schraube sicher in ihrer zentrierten Position gehalten wird.

In Fig. 3 ist der Verbindungsbeschlag 20 (ohne die Spannschrauben 32) in einer Ansicht schräg von oben gezeigt, so dass die Gesamtkonfiguration deutlicher zu erkennen ist.

Die Schraubprofile an den Wänden der Schraubkanäle 34 sind so gestaltet, dass sie einerseits zu den Gewindegängen der Spannschrauben 32 passen, andererseits jedoch bei der spritztechnischen Herstellung des Verbindungsbeschlages mittels Schrägzügen entformt werden können.

Die Spannschrauben 32 können aus Metall oder Kunststoff bestehen und einen Senckopf oder wahlweise auch einen Flachkopf oder einen Senkkopf mit Bund aufweisen, so dass eine flache Auflagefläche gebildet wird, und sie können für den Eingriff eines Schraubwerkzeugs einen Schlitz, einen Kreuzschlitz und/oder einen Innensechskant aufweisen.

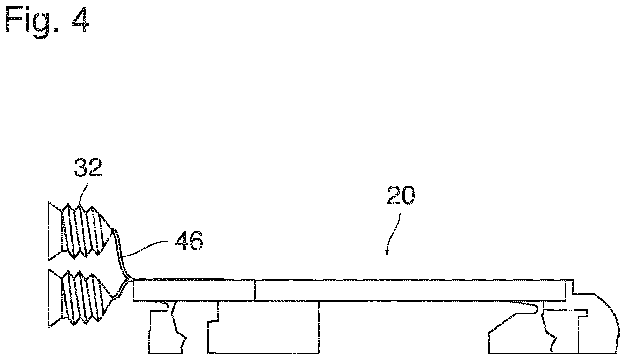

In einer in Fig. 4 gezeigten Ausführungsform bestehen auch die Spannschrauben 32 aus Kunststoff, und sie sind in dem Zustand, in dem der Verbindungsschlag das Spritzgießwerkzeug verlässt, durch Verbindungsstreifen 46 einstückig mit dem Steg 22 verbunden. Diese Verbindungsstreifen 46 sind so gestaltet, dass sie später beim Eindrehen der Spannschrauben abgeschert oder abgerissen werden können.

## Patentansprüche

1. Verbindungsbeschlag zum verspannenden Verbinden von zwei auf Stoß aneinander anliegenden Bauteilen (10), die jeweils in einer Hauptfläche eine Ausnehmung (16, 18) aufweisen, welcher Verbindungbeschlag (20) einen flach auf die Hauptflächen auflegbaren Steg (22) aufweist, an dem zwei Eingriffsteile (24, 26) für den Eingriff in je eine der Ausnehmungen (16, 18) angeordnet sind, wobei mindestens eines der Eingriffsteile (24, 26) gelenkig an dem Steg (22) gehalten und mittels einer Spanneinrichtung (32, 36, 38) gegen eine Wand der Ausnehmung spannbar ist und das mindestens eine der Eingriffsteile (24, 26) einstückig mit dem Steg (22) verbunden ist, wobei die Spanneinrichtung eine Spannschraube (32) und ein starr an dem Steg (22) gehaltenes Widerlager (36,38) für die Spannschraube aufweist, **dadurch gekennzeichnet, dass** das mindestens eine der Eingriffsteile (24, 26) über ein Filmscharnier (28) mit dem Steg (22) verbunden ist, das Eingriffsteil (24, 26) und das Widerlager (36, 38) einen sich verjüngenden Schraubkanal (34) begrenzen und das Eingriffsteil (24) beim Einschrauben der Spannschraube (32) in den Schraubkanal (34) nach Art eines Spreizdübels von dem Widerlager (36, 38) abspreizbar ist.

2. Verbindungsbeschlag nach Anspruch 1, bei dem beide Eingriffsteile (24, 26) über Filmscharniere (28) einstückig mit dem Steg (22) verbunden sind.

3. Verbindungsbeschlag nach Anspruch 1 oder 2, bei dem mindestens eine Wand des Schraubkanals (34) einen in Bezug auf die Mitte des Schraubkanals asymmetrisch angeordneten Stützvorsprung (44) für die Spannschraube (32) bildet.

4. Verbindungsbeschlag nach einem der Ansprüche 1 bis 3, bei dem das mindestens eine der Eingriffsteile (26) sich von der Position des Filmscharniers (28) aus etwa parallel zum Steg (22) in Richtung auf die Umfangswand der Ausnehmung (18) erstreckt.

5. Verbindungsbeschlag nach Anspruch 4, bei dem das mindestens eine der Eingriffsteil (26) am freien Ende mindestens eine Schneidkontur (40) zum Einkrallen in die Umfangswand der Ausnehmung (18) aufweist.

6. Verbindungsbeschlag nach einem der Ansprüche 1 bis 5, bei dem das Filmscharnier (28) in einer Richtung parallel zur Einschraubrichtung der Spannschraube (32) komprimierbar ist und die Spannschraube (32) sich im eingeschraubten Zustand mit einem Kopf auf den Rand eines Schraubenloches (30) des Steges (22) abstützt.

7. Verbindungsbeschlag nach einem der vorstehenden Ansprüche, bei dem der Steg (22) und die Eingriffsteile (24, 26) durch ein Spritzteil aus Kunststoff gebildet sind.

8. Verbindungsbeschlag nach Anspruch 7, bei dem die Verbindungsschraube (32) aus Kunststoff besteht und in einem Zustand vor Ingebrauchnahme des Verbindungsbeschlages durch einen Verbindungsstreifen (46) einstückig mit dem Steg (22) verbunden ist.

## Claims

1. Connection fitting for bracingly connecting two components (10) which abut against each other and each have a recess (16, 18) in a main surface, which connection fitting (20) has a web (22) which can be laid flat on the main surfaces and on which two engagement parts (24, 26) are arranged for engagement in one of the recesses (16, 18) each, wherein at least one of the engagement parts (24, 26) is held in an articulated manner on the web (22) and can be clamped against a wall of the recess by means of a clamping device (32, 36, 38) and the at least one of the engagement parts (24, 26) is integrally connected to the web (22), the clamping device having a clamping screw (32) and an abutment (36, 38) for the clamping screw, which is held rigidly on the web (22), **characterized in that** the at least one of the engagement parts (24, 26) is connected to the web (22) via a film hinge (28), the engagement part (24, 26) and the abutment (36, 38) delimit a tapered screw channel (34) and the engagement part (24) can be spread away from the abutment (36, 38) in the manner of an expanding dowel when the clamping screw (32) is screwed into the screw channel (34).

2. Connection fitting according to claim 1, wherein both engagement parts (24, 26) are integrally connected to the web (22) via film hinges (28).

3. Connection fitting according to claim 1 or 2, wherein at least one wall of the screw channel (34) forms a supporting projection (44) for the clamping screw (32), which projection is arranged asymmetrically with respect to the center of the screw channel.

4. Connection fitting according to any one of claims 1 to 3, wherein the at least one of the engagement parts (26) extends from the position of the film hinge (28) approximately parallel to the web (22) towards the circumferential wall of the recess (18).

5. Connection fitting according to claim 4, wherein the at least one of the engaging parts (26) has at least one cutting contour (40) at the free end for clawing into the circumferential wall of the recess (18).

6. Connection fitting according to one of the claims 1 to 5, wherein the film hinge (28) is compressible in a direction parallel to the screw-in direction of the clamping screw (32) and the clamping screw (32) is supported with a head on the edge of a screw hole (30) of the web (22) in the screwed-in state.

7. Connection fitting according to one of the preceding claims, wherein the web (22) and the engagement parts (24, 26) are formed by an injection-molded part made of plastic.

8. Connection fitting according to claim 7, wherein the connecting screw (32) is made of plastic and, in a state before the connecting fitting is put into use, is integrally connected to the web (22) by a connecting strip (46).

## Revendications

1. Ferrure d'assemblage pour assembler de manière serrée deux composants (10) en contact l'un avec l'autre par poussée, qui comportent respectivement un évidement (16, 18) dans une surface principale, laquelle ferrure d'assemblage (20) comporte une entretoise (22) pouvant reposer à plat sur les surfaces principales, sur laquelle deux parties de prise (24, 26) sont agencées pour la mise en prise dans l'un des évidements (16, 18), dans laquelle au moins une des parties de prise (24, 26) est maintenue de manière articulée sur l'entretoise (22) et peut être serrée contre une paroi de l'évidement au moyen d'un dispositif de serrage (32, 36, 38) et la au moins une des parties de prise (24, 26) est reliée d'un seul tenant à l'entretoise (22), dans laquelle le dispositif de serrage comporte une vis de serrage (32) et une butée (36, 38) pour la vis de serrage rigidement maintenue sur l'entretoise (22), **caractérisée en ce que** la au moins une des parties de prise (24, 26) est reliée à l'entretoise (22) par l'intermédiaire d'une charnière à film (28), la partie de prise (24, 26) et la butée (36, 38) délimitent un canal de vissage (34) qui se rétrécit, et la partie de prise (24) peut être écartée par la butée (36, 38) lors du vissage de la vis de serrage (32) dans le canal de vissage (34) en fonction du type d'une cheville expansible.

2. Ferrure d'assemblage selon la revendication 1, dans laquelle les deux parties de prise (24, 26) sont reliées d'un seul tenant à l'entretoise (22) par l'intermédiaire de charnières à film (28).

3. Ferrure d'assemblage selon la revendication 1 ou 2, dans laquelle au moins une paroi du canal de vissage (34) forme une saillie d'appui (44) pour la vis de serrage (32) agencée asymétriquement par rapport au centre du canal de vissage.

4. Ferrure d'assemblage selon l'une des revendications 1 à 3, dans laquelle la au moins une des parties de prise (26) s'étend à partir de la position de la charnière à film (28) de manière sensiblement parallèle à l'entretoise (22) en direction de la paroi périphérique de l'évidement (18).

5. Ferrure d'assemblage selon la revendication 4, dans laquelle la au moins une des parties de prise (26) présente, au niveau de l'extrémité libre, au moins un profil de coupe (40) destiné à s'agripper dans la paroi périphérique de l'évidement (18).

6. Ferrure d'assemblage selon l'une des revendications 1 à 5, dans laquelle la charnière à film (28) peut être comprimée dans une direction parallèle à la direction de vissage de la vis de serrage (32) et la vis de serrage (32) s'appuie, à l'état vissé avec une tête, sur le bord d'un trou de vis (30) de l'entretoise (22).

7. Ferrure d'assemblage selon l'une des revendications précédentes, dans laquelle l'entretoise (22) et les parties de prise (24, 26) sont formées par une pièce en matière plastique moulée par injection.

8. Ferrure d'assemblage selon la revendication 7, dans laquelle la vis de serrage (32) est constituée d'une matière plastique et, dans un état précédant la mise en service de la ferrure d'assemblage, est reliée d'un seul tenant à l'entretoise (22) par une barrette de liaison (46).
